# EUROPÄISCHE PATENTANMELDUNG

(11) **EP 2 524 971 A1**
(43) Veröffentlichungstag der Anmeldung: **21.11.2012**
(21) Anmeldenummer: 11166823.2
(22) Anmeldetag: 20.05.2011
(51) Int. Cl.: C21D 8/02, C21D 9/56, C21D 9/60, F27B 9/06, F27B 19/04, B21B 1/46

(54) **Verfahren und Vorrichtung zum Aufbereiten von Walzgut aus Stahl vor dem Warmwalzen**

(71) Anmelder: Siemens VAI Metals Technologies GmbH, 4031 Linz (AT)
(72) Erfinder: Eckerstorfer, Gerald, 4060, Leonding (AT); Hohenbichler, Gerald, 4484, Kronstorf (AT); Linzer, Bernd, 4020, Linz (AT)
(74) Vertreter: Maier, Daniel Oliver

(57) **Zusammenfassung**

Die Erfindung betrifft ein Verfahren und eine Vorrichtung zum Aufbereiten von Walzgut (5,16,22) aus Stahl vor dem Warmwalzen. Aufgabe der Erfindung ist es, ein energieeffizientes Verfahren und eine kompakte Vorrichtung zur Aufbereitung von Walzgut zu finden, mit denen das Walzgut auch bei transienten, rasch wechselnden Geschwindigkeiten zuverlässig erwärmt und dennoch gründlich entzundert wird. Diese Aufgabe wird durch ein Verfahren mit den Schritten gelöst:
- Vorwärmen des Walzguts (5,16,22) in einem ersten Induktionsofen (6), sodass das vorgewärmte Walzgut mit einer Oberflächentemperatur T₁ ≥ 1000 °C in eine nachfolgende Entzunderungseinrichtung (7) eintritt; anschließend
- Entzundern des vorgewärmten Walzguts mittels mehrerer Wasserstrahlen in der Entzunderungseinrichtung (7); unmittelbar anschließend
- Erwärmen des entzunderten Walzguts in einem zweiten Induktionsofen (8), wobei das entzunderte Walzgut mit einer Temperatur T₂ ≥ T_{Curie} des Walzguts in den zweiten Induktionsofen (8) eintritt und die Erwärmung im zweiten Induktionsofen entweder in einer weitgehend inerten oder weitgehend reduzierenden Schutzgasatmosphäre erfolgt; unmittelbar anschließend
- Warmwalzen des erwärmten Walzguts in einem Walzwerk (9), wobei das erwärmte Walzgut mit einer Temperatur 1220 °C ≥ T₃ ≥ 1050 °C in das Walzwerk (9) eintritt.

## Beschreibung

### Gebiet der Technik

Die vorliegende Erfindung betrifft ein Verfahren zum Aufbereiten von Walzgut aus Stahl vor dem Warmwalzen, umfassend die Schritte Vorwärmen des Walzguts, Entzundern des vorgewärmten Walzguts, Erwärmen des entzunderten Walzguts, und schließlich dem Warmwalzen des Walzguts selbst.

Außerdem betrifft die Erfindung eine Vorrichtung zum Aufbereiten von Walzgut aus Stahl vor dem Warmwalzen, umfassend einen ersten Ofen zum Vorwärmen des Walzguts, eine Entzunderungseinrichtung zum Entzundern des vorgewärmten Walzguts, einen zweiten Ofen zum Erwärmen des entzunderten Walzguts und schließlich ein Walzwerk zum Warmwalzen des erwärmten Walzguts selbst.

### Stand der Technik

Aus der WO 2008/000396 A1 ist eine Gieß-Walz-Verbundanlage zur Herstellung von Silizium-Stahl bekannt, mit der das Walzgut in einem Rollenherdofen erwärmt, anschließend entzundert, in einem Induktionsofen auf eine Temperatur größer der Walztemperatur erhitzt, anschließend nochmals entzundert und schließlich warmgewalzt wird.

Nachteilig an diesem Verfahren zur Aufbereitung des Walzguts ist, dass der Rollenherdofen schlecht an rasch wechselnde Betriebsbedingungen, z.B. an die Gießgeschwindigkeiten beim Anfahren bzw. beim Herunterfahrens der Anlage, anpassbar ist, dass das Walzgut zweimal entzundert werden muss, und dass das entzunderte Walzgut im Induktionsofen auf eine Temperatur deutlich über, typischerweise bis zu 100 °C über, der Walztemperatur erhitzt werden muss, bevor es warmgewalzt werden kann. Somit ist das Verfahren aufwändig und vor allem energetisch ineffizient; außerdem ist auch die Anlage aufwändig und weist eine große Baulänge auf.

### Zusammenfassung der Erfindung

Die Aufgabe der Erfindung ist es, die Nachteile des Stands der Technik zu überwinden und ein energieeffizientes Verfahren und eine kompakte Vorrichtung zur Aufbereitung von Walzgut zu finden, mit denen das Walzgut auch bei transienten, rasch wechselnden Geschwindigkeiten zuverlässig und energieeffizient erwärmt und dennoch gründlich entzundert wird.

Diese Aufgabe wird durch ein Verfahren gemäß Anspruch 1 gelöst, das folgende Verfahrensschritte aufweist:
- Vorwärmen des Walzguts in einem ersten Induktionsofen, sodass das vorgewärmte Walzgut mit einer Oberflächentemperatur T₁ ≥ 1000 °C, bevorzugt T₁ ≥ 1050 °C, in eine nachfolgende Entzunderungseinrichtung eintritt; anschließend
- Entzundern des vorgewärmten Walzguts mittels mehrerer Wasserstrahlen in der Entzunderungseinrichtung; unmittelbar anschließend
- Erwärmen des entzunderten Walzguts in einem zweiten Induktionsofen, wobei das entzunderte Walzgut mit einer Temperatur T₂ ≥ T_{Curie} des Walzguts, vorzugsweise T₂ ≥ 900 °C, in den zweiten Induktionsofen eintritt und die Erwärmung im zweiten Induktionsofen in entweder einer weitgehend inerten oder einer weitgehend reduzierenden Schutzgasatmosphäre erfolgt; unmittelbar anschließend
- Warmwalzen des erwärmten Walzguts in einem Walzwerk mit mindestens 3 Walzstichen, wobei das erwärmte Walzgut mit einer Temperatur 1220 °C ≥ T₃ ≥ 1050 °C in das Walzwerk eintritt.

Beim Walzgut kann es sich sowohl um ein Gießprodukt, z.B. mit Brammen-, Dünnbrammen-, Knüppel- oder Vorblock-Querschnitt, als auch um ein gewalztes Flach- oder Langprodukt, z.B. ein sogenanntes Vorband oder einen Vorstreifen, handeln. Häufig handelt es sich beim Walzgut bereits um ein vorgewalztes Produkt, das in einem Vorwalzgerüst oder einer Vorwalzstaffel produziert wurde.

Erfindungsgemäß wird das Walzgut in einem ersten Induktionsofen, der eine inerte Schutzgasatmosphäre aufweisen kann aber nicht muss, auf eine Temperatur T₁ > 1000 °C, bevorzugt T₁ > 1050 °C, vorgewärmt, sodass das vorgewärmte Walzgut mit einer Oberflächentemperatur T₁ > 1000 °C in die nachgelagerte Entzunderungseinrichtung eintritt, wodurch eine gründliche Entzunderung des Walzguts gewährleistet ist. Weist das vorgewärmte Walzgut eine Temperatur > 1050 °C auf, so erfolgt die Entzunderung noch gründlicher, da zusätzlich zum Impuls der Wasserstrahlen ein Temperaturschock auf den Zunder bewirkt wird. Das Entzundern mittels der Entzunderungseinrichtung, die typischerweise aus mehreren, jeweils auf der Ober- und auf der Unterseite über die Breitseite des Walzguts verteilten einzelnen Entzunderungseinheiten (z.B. Einzeldüsen oder Düsenrotoren) besteht, stellt sicher, dass das Walzgut mit einem sehr geringen Zunderbelag in den zweiten Induktionsofen eintritt, wobei die Temperatur des Walzguts im zweiten Induktionsofen ständig höher als die sogenannte Curie-Temperatur T_{Curie} (bei Eisen bzw. Stahl ca. 770 °C), des Walzguts ist. Oberhalb von T_{Curie} verliert das Walzgut die ferromagnetischen bzw. ferroelektrischen Eigenschaften, wodurch eine konstante Permeabilität des Walzguts bei der Erwärmung sichergestellt ist. Es hat sich herausgestellt, dass insbesondere die Leistungselektronik leistungsstarker Induktionsöfen unterhalb des bzw. beim Phasenübergang eines ferromagnetischen Walzguts in dessen paramagnetische Hochtemperaturform geschädigt werden kann, wobei dies beim erfindungsgemäßen Verfahren zuverlässig verhindert wird. Durch das Erwärmen des entzunderten Walzguts im zweiten Induktionsofen, der entweder eine weitgehend inerte oder eine weitgehend reduzierende Schutzgasatmosphäre aufweist, wird das Walzgut auf die Walztemperatur T₃ gebracht, ohne dass dabei eine erhebliche, zusätzliche Zunderschicht entsteht. Schließlich wird das erwärmte und entzunderte Walzgut in einem Walzwerk warmgewalzt, wobei das Walzgut mit einer Temperatur zwischen 1050 °C und 1220 °C in das typischerweise mehrgerüstige Walzwerk eintritt. Durch das einmalige Entzundern weist das erfindungsgemäße Verfahren eine hohe Energieeffizienz auf, sodass z.B. in einer QSP-Anlage die im Tunnelofen aufgenommene Wärme erhalten bleibt, sodass das Walzgut nur wenig zusätzlich vorgewärmt bzw. erwärmt werden muss, und vor allem, da das Walzgut nur einmal entzundert werden muss, da der zweite Induktionsofen mit einer weitgehend inerten oder weitgehend reduzierenden Schutzgasatmosphäre betrieben wird.

Die zweistufige Erwärmung des Walzguts, d.h. das Vorwärmen im ersten Induktionsofen und das Erwärmen im zweiten Induktionsofen, hat den großen Vorteil, dass zwei unterschiedliche Prozessparameter unabhängig voneinander optimal eingestellt werden können. Zum Einen ist eine optimale Einstellung der stahlgüteabhängigen Entzunderungstemperatur möglich; zum Anderen wird das Warmwalzen bei einer optimalen Temperatur durchgeführt, wobei insbesondere die sog. Endwalztemperatur, d.h. die Temperatur beim letzten Walzstich, eine Abhängigkeit von der Anzahl der Walzstiche, dem Durchsatz und der Gesamtdickenreduktion aufweist.

Bei einer besonders energieeffizienten Ausführungsform wird das vorgewärmte Walzgut durch mehrere rotierende Wasserstrahlen aus je einem Rotor einer Rotations-Entzunderungseinrichtung entzundert. Hierbei wird das Walzgut von mehreren rotierenden, schräg gegen die Oberfläche des Warmbands gerichteten Wasserstrahlen eines Rotations-Entzunderers von Zunder befreit, wobei das Wasser im Entzunderer z.B. einen Druck zwischen 200 und 420 bar aufweist.

Aus energetischer Sicht ist es besonders vorteilhaft, wenn das entzunderte Walzgut mit einer Temperatur > 900 °C in den zweiten Induktionsofen eintritt, sodass das Walzgut zum Einen durch das Entzundern nur wenig abgekühlt wird und zum Anderen, das Walzgut in der entweder weitgehend inerten oder weitgehend reduzierenden Schutzgasatmosphäre im zweiten Induktionsofen auch nur wenig stark erwärmt werden muss. Diese Ausführungsform zeichnet sich durch besonders hohe Energieeffizienz aus.

Für eine gleichbleibend hohe Entzunderungswirkung als auch für eine hohe Energieeffizienz ist es vorteilhaft, dass die Temperatur T₁ des vorgewärmten Walzguts vor dem Entzundern mittels einer Temperaturmesseinrichtung erfasst und einem Regler zugeführt wird; und dass der Regler unter Zuhilfenahme eines Regelgesetzes und unter Berücksichtigung einer Soll-Temperatur T_{1 Soll} eine Stellgröße ermittelt und einem Regelorgan zuführt, wobei wenigstens ein Induktor des ersten Induktionsofens so angesteuert wird, dass die Temperatur T₁ des vorgewärmten Walzguts der Soll-Temperatur T_{1 Soll} möglichst entspricht. Dabei kann die Temperaturmesseinrichtung z.B. als ein Pyrometer oder eine Thermokamera ausgeführt sein, wodurch eine berührungslose Temperaturerfassung des Walzguts ermöglicht wird.

Nach einer weiteren vorteilhaften Ausführungsform wird ein Temperaturprofil **T**₁ des vorgewärmten Walzguts vor dem Entzundern mittels einer Temperaturprofilmesseinrichtung erfasst und einem Regler zugeführt; der Regler ermittelt unter Zuhilfenahme eines Regelgesetzes und unter Berücksichtigung eines Soll-Temperaturprofils **T**_{1 Soll} eine Stellgröße und führt sie einem Regelorgan zu, wobei wenigstens ein Induktor des ersten Induktionsofens so angesteuert wird, dass das Temperaturprofil **T**₁ des vorgewärmten Walzguts dem Soll-Temperaturprofil **T**_{1 Soll} möglichst entspricht. Hierbei kann es sich beim Temperaturprofil um einen Vektor diskreter Temperaturen handeln, sodass das Temperaturprofil fett gedruckt wurde. Mittels dieser Ausführungsform kann eine besonders gleichmäßige Temperaturverteilung im Walzgut und daher eine gleichmäßig hohe Entzunderungsleistung des Walzguts erreicht werden. Hierbei kann die Temperaturprofilmesseinrichtung aus mehreren stationären Temperaturmesseinrichtungen oder z.B. aus einer in quer zur Transportrichtung des Walzguts traversierenden Temperaturmesseinrichtung gebildet werden; auch Thermokameras sind dafür bestens geeignet.

Es ist weiters vorteilhaft, eine Temperatur T₃ des erwärmten und entzunderten Walzguts vor dem Warmwalzen mittels einer Temperaturmesseinrichtung zu erfassen und einem Regler zuzuführen, dass der Regler unter Zuhilfenahme eines Regelgesetzes und unter Berücksichtigung einer Soll-Temperatur T_{3 Soll} eine Stellgröße ermittelt und einem Regelorgan zuführt, wobei wenigstens ein Induktor des zweiten Induktionsofens so angesteuert wird, dass die Temperatur T₃ des erwärmte Walzguts der Soll-Temperatur T_{3 Soll} möglichst entspricht. Hierbei wird die Soll-Walztemperatur hochgenau und zuverlässig auch bei verschiedenen Bandgeschwindigkeiten bzw. Betriebsbedingungen erreicht.

Eine weitere Verbesserung ist möglich, wenn nicht nur eine Temperatur sondern ein (kontinuierliches oder diskretisiertes) Temperaturprofil **T**₃ des erwärmten und entzunderten Walzguts vor dem Warmwalzen erfasst wird und einem Regler zugeführt wird. Der Regler ermittelt unter Zuhilfenahme eines Regelgesetzes und unter Berücksichtigung eines Soll-Temperaturprofils **T_{3 Soll}** eine Stellgröße und führt sie einem Regelorgan zu, wobei wenigstens ein Induktor des zweiten Induktionsofens so angesteuert wird, dass das Temperaturprofil **T₃**des erwärmten Walzguts dem Soll-Temperaturprofil **T_{3 Soll}** möglichst entspricht.

Für alle vorgenannten Regelvorgänge sind beispielsweise P-, PI-, PID- oder höherwertige Regler geeignet. Dem Fachmann ist bekannt, dass auch andere Regelgesetze (z.B. Zustandsregler, gegebenenfalls mit einem Zustandsbeobachter) zum Einsatz kommen können.

Zur Verhinderung von Zunderbildung ist es vorteilhaft, wenn der Sauerstoffgehalt der weitgehend inerten Schutzgasatmosphäre < 10% Vol, bevorzugt < 2% Vol, gehalten wird. Als Schutzgas kommt typischerweise Wasserstoff, Stickstoff, Argon oder auch Mischungen dieser Gase zum Einsatz.

Bei einer weitgehend reduzierenden Schutzgasatmosphäre ist es vorteilhaft, wenn der Wasserstoffgehalt zwischen 1 und 5 % Vol, bevorzugt zwischen 3 und 4,5 % Vol, gehalten wird. Bei einer bevorzugten Variante weist das Inertisierungsmedium einen N₂ Gehalt von 95 bis 99 % Vol auf, wobei das Inertisierungsmedium dem Ofenraum zugeführt wird.

Außerdem wird die Aufgabe durch eine Vorrichtung gemäß Anspruch 9 gelöst, aufweisend
- ein erster Induktionsofen zum Vorwärmen des Walzguts auf eine Temperatur T₁ ≥ 1000 °C, bevorzugt T₁ ≥ 1050 °C; ; nachfolgend
- eine Entzunderungseinrichtung zum Entzundern des vorgewärmten Walzguts mittels mehrerer Wasserstrahlen; unmittelbar nachfolgend
- ein zweiter Induktionsofen mit einer inerten oder einer reduzierenden Schutzgasatmosphäre zum Erwärmen des entzunderten Walzguts auf einer Temperatur 1220 °C ≥ T₃ ≥ 1050 °C; unmittelbar nachfolgend
- ein Walzwerk mit mindestens drei Gerüsten zum Warmwalzen des erwärmten Walzguts.

Die erfindungsgemäße Vorrichtung weist eine geringe Baulänge und geringe Investitionskosten auf. Kombiniert mit der hohen Energieeffizienz des Verfahrens sind geringe Gesamtkosten pro Tonne Stahl bei einer hohen Produktqualität des Warmwalzguts erzielbar.

Es ist vorteilhaft, wenn die Entzunderungseinrichtung jeweils wenigstens eine Rotations-Entzunderungseinrichtung auf der Ober- und auf der Unterseite des Walzguts umfasst.

Es ist weiters vorteilhaft, wenn zwischen dem ersten Induktionsofen und der Entzunderungseinrichtung eine Messeinrichtung, die mit einem Regler verbunden ist, zur Messung einer Temperatur oder eines Temperaturprofil des Walzguts angeordnet ist, wobei der Regler mit wenigsten einem Induktor des ersten Induktionsofens verbunden ist.

Weiters ist es vorteilhaft, wenn zwischen dem zweiten Induktionsofen und dem Warmwalzwerk eine Messeinrichtung, die mit einem Regler verbunden ist, zur Messung einer Temperatur oder eines Temperaturprofil des Walzguts angeordnet ist, wobei der Regler mit wenigsten einem Induktor des zweiten Induktionsofens verbunden ist.

Um die Abkühlung des vorgewärmten Walzguts nach dem ersten Induktionsofen zu minimieren, ist es zweckmäßig, wenn der Abstand zwischen der Austrittsöffnung des ersten Induktionsofens und der Entzunderungseinrichtung max. 7 m, vorzugsweise max. 4 m, beträgt.

Außerdem ist es günstig, dass der Abstand zwischen der Austrittsöffnung des zweiten Induktionsofens und dem Walzspalt des ersten Walzgerüsts des Warmwalzwerks max. 7 m, vorzugsweise max. 4 m, beträgt.

Alternativ zu den letzten zwei Ausführungsformen bzw. gegebenenfalls zusätzlich dazu ist es vorteilhaft, das Walzgut zwischen dem ersten Induktionsofen und dem Entzunderer, aber auch zwischen dem zweiten Induktionsofen und dem Warmwalzwerk mittels einer Thermohaube vor Temperaturverlust zu schützen.

Besonders vorteilhaft ist es, die erfindungsgemäße Vorrichtung bei einer Gieß-Walz-Verbundanlage zur Herstellung von Bandstahl, z.B. in einer ESP Anlage zwischen der Vorwalzstraße und der Fertigwalzstraße oder in einer ISP Gieß-Walz-Verbundanlage zwischen der beheizbaren Coilbox und der Fertigwalzstraße anzuordnen.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden schematischen Figuren Bezug genommen wird, die Folgendes zeigen:
Fig 1: eine ESP Gieß-Walz-Verbundanlage zur vollkontinuierlichen Herstellung von Warmband mit einer Vorrichtung zum Aufbereiten von Walzgut
Fig 2: ein erfindungsgemäßer Temperaturverlauf zu Fig 1 und zwei schematische Temperaturverläufe nach dem Stand der Technik
Fig 3: ein erfindungsgemäßes Regelschema
Fig 4: einen Ausschnitt einer ISP Gieß-Walz-Verbundanlage zur Herstellung von Warmband mit einer erfindungsgemäßen Vorrichtung
Fig 5: eine Warmwalzstraße zum Warmwalzen von Dünnbrammen mit einer Vorrichtung zum Aufbereiten von Walzgut
Fig 6: eine konventionelle Warmwalzstraße zum Warmwalzen von Brammen mit einer Vorrichtung zum Aufbereiten von Walzgut

### Beschreibung der Ausführungsformen

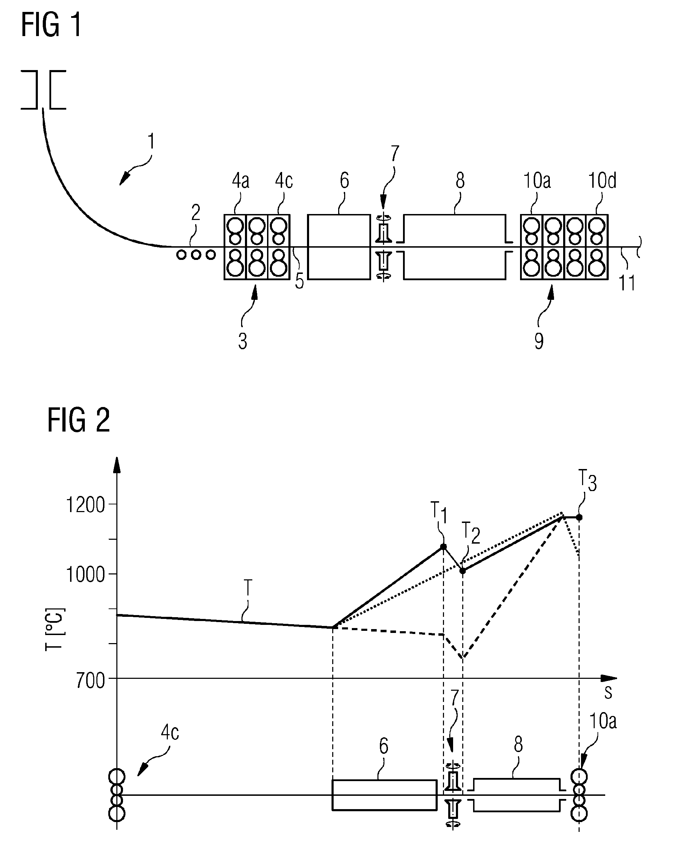

Fig 1 zeigt eine schematische Darstellung einer Gieß-Walz-Verbundanlage zur Herstellung von Bandstahl mit 2200 mm Breite. Die Anlage umfasst
- eine Stranggießmaschine 1 zum Vergießen von Dünnbrammen 2, wobei der teilerstarrte Strang mit einer Dicke von 80 mm aus der Kokille austritt;
- eine nicht näher dargestellte Strangführung zur Liquid Core Reduction (LCR) oder Soft Core Reduction (SCR) der Dünnbramme in der Strangführung auf eine Dicke von 70 mm;
- eine nicht dargestellte Notschere zwischen dem horizontalen Auslaufbereich der Stranggießmaschine 1 und einer Vorwalzstraße 3;
- die Vorwalzstraße 3 mit drei Gerüsten 4a, 4b, 4c zur dreistufigen Reduktion der Dünnbramme auf ein Vorband 5 mit einer Dicke von 13 mm, wobei das Vorband die Vorwalzstraße mit einer Temperatur von 880 °C verlässt; nachfolgend
- ein erster Induktionsofen 6 zum Vorwärmen des Vorbands, wobei das vorgewärmte Vorband eine Temperatur von T₁ = 1080 °C aufweist;
- eine Entzunderungseinrichtung 7, die aus jeweils mehreren Rotor-Entzunderern auf der Oberseite und der Unterseite des Vorbands besteht, wobei jeder Entzunderer acht Einzeldüsen aufweist und die Wasserstrahlen aus einem Entzunderer schräg auf die Oberfläche des Walzguts auftreffen. Durch das Entzundern wird das Walzgut auf eine Temperatur von T₂ = 1010 °C abgekühlt.
- Direkt nach der Entzunderungseinrichtung 7 wird das Walzgut durch einen zweiten Induktionsofen 8 in einer inerten Atmosphäre bestehend aus 94 % Vol N₂, 5 % Vol 0₂, und 1 % Vol andere Gase (Ar, Xe, Kr, CO, CO₂, H₂), erwärmt, sodass das Walzgut beim Verlassen des zweiten Induktionsofens 8 eine querschnittsgemittelte Temperatur von 1160 °C aufweist.
- Schließlich wird das entzunderte und erwärmte Walzgut in einer viergerüstigen Fertigwalzstraße 9 durch vier Reduktionsschritte auf ein Fertigband 11 mit einer Dicke von 4 mm warmgewalzt. Das Abkühlen, Ablängen und Aufwickeln des Fertigbands wurde aus Gründen der Übersichtlichkeit nicht dargestellt.

Die Fig 2 zeigt die beim Verfahren gemäß Fig 1 auftretenden Temperaturen im Vergleich zu zwei Ausführungsformen nach dem Stand der Technik. Der Verlauf der Temperaturen nach dem erfindungsgemäßen Verfahren wurde durchgezogen, der Verlauf der Temperaturen nach einer ersten Ausführungsform nach dem Stand der Technik wurden strichliert dargestellt. Diese erste Ausführungsform nach dem Stand der Technik stellt eine zu Fig 1 ähnliche Anlage dar, allerdings mit dem Unterschied, dass keine Vorwärmung des Vorbands mittels eines ersten Induktionsofens 6 stattfindet (siehe z.B. EP 1 951 451 B1). Aus dem Diagramm nach Fig 2 geht klar hervor, dass das Walzgut beim Eintritt in die Entzunderungseinrichtung 7 nur mehr eine Temperatur von 830°C aufweist, sodass eine gründliche Entzunderung des Walzguts nicht mehr für alle Stahlgüten möglich ist. Außerdem wird nach dem Stand der Technik das Walzgut durch das Entzundern auf eine Temperatur von 760°C abgekühlt, sodass im zweiten Induktionsofen 8 ein Phasenübergang vom ferromagnetischen in den paramagnetischen Bereich des Walzguts auftritt. Im Gegensatz dazu stellt die Vorerwärmung des Walzguts auf eine Temperatur von 1080 °C im ersten Induktionsofen 6 sicher, dass das Walzgut mit einer Temperatur > 1000 °C in die Entzunderungseinrichtung eintritt; nach der Entzunderung weist das Walzgut nach wie vor eine Temperatur von 1010 °C auf, sodass der leistungsstarke zweite Induktionsofen 8 stets im paramagnetischen Bereich des Walzguts betrieben wird. Dadurch wird eine Schädigung der Induktoren zuverlässig verhindert, was sich auf die Zuverlässigkeit und die Standzeit der Induktoren positiv auswirkt.

Fig 2 zeigt auch eine zweite übliche Verfahrensweise mit punktiertem Temperaturverlauf als Stand der Technik. Diesen Stand der Technik stellt eine zu Fig 1 ähnliche Anlage dar, allerdings mit dem Unterschied, dass das Walzgut nur ein einziges Mal mittels eines Induktionsofens erwärmt wird. Aus dem Diagramm nach Fig 2 geht hervor, dass das Walzgut beim Eintritt in die Entzunderungseinrichtung 7 eine Temperatur von 1180°C aufweist. Die anschließende gründliche Entzunderung des Walzguts bis zum Eintritt in die Fertigstraße führt zu einer Abkühlung um insgesamt 130 K.

Also wird das Walzgut durch das Entzundern bis zum Einlauf ins erste Walzgerüst auf eine Temperatur von 1050°C abgekühlt. Der Gesamtenergieverlust durch die Entzunderung ist daher deutlich höher (beinahe doppelt so hoch) als beim erfindungsgemäßen Verfahren.

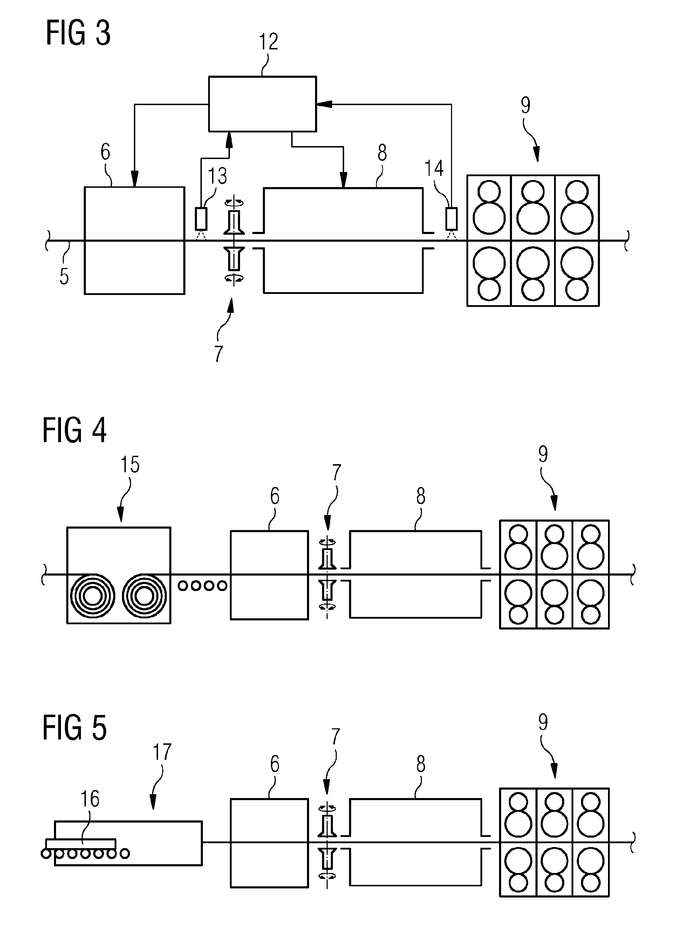

Die Fig 3 zeigt eine Vorrichtung zum Aufbereiten von Walzgut, wobei zusätzlich zur Fig 1 zwischen dem ersten Induktionsofen 6 und der Entzunderungseinrichtung 7 eine Temperaturerfassungseinrichtung 8 und zwischen dem zweiten Induktionsofen 8 und der Warmwalzwerk 9 eine Temperaturprofilerfassungseinrichtung 14 angeordnet ist. Beide Einrichtungen 13,14 sind mit einem Regler 12, der jeweils die Induktoren des ersten und des zweiten Induktionsofens ansteuert, verbunden. Somit stellt der Regler 12 sicher, dass die Temperatur des vorgewärmten Walzguts vor dem Entzundern einer ersten Solltemperatur T_{1_soll} (i.A. > 1000 °C) und die Temperatur des erwärmten Walzguts vor dem Warmwalzen einer zweiten Solltemperatur T_{2_Soll} (i.A. zwischen 1050 und 1250 °C) beträgt. An dieser Ausführungsform ist besonders vorteilhaft, dass der erste Induktionsofen 6 nur die zusätzliche Energie liefert, um das Walzgut gründlich zu entzundern und das Walzgut mit einer Temperatur > T_{Curie} (bei Stahl ca. 770 °C) in den zweiten Induktionsofen 8 einläuft. Bei höheren Geschwindigkeiten der Stranggießmaschine bzw. des Vorbands 5 wird somit wenig Energie eingebracht; wird allerdings der Gießprozess oder der Vorwalzprozess verlangsamt, so muss das Vorband 5 entsprechend stärker vorgewärmt werden.

Obwohl nicht explizit dargestellt, ist auch eine Variante denkbar, bei der zwischen der Entzunderungseinrichtung 7 und dem zweiten Induktionsofen 8 eine weitere Temperaturerfassungseinrichtung angeordnet ist. In diesem Fall kann somit gezielt auf die Eintrittstemperatur in den zweiten Induktionsofen geregelt werden.

In Fig 4 ist die Aufbereitung von Walzgut in einer ISP Anlage dargestellt. Dabei wird das Warmband mittels einer beheizbaren Coilbox 15 (der sogenannten Cremona-Box) erwärmt und warmgehalten und nach dem Abwickeln dem ersten Induktionsofen 6 zugeführt. Anschließend wird das Warmband in der Entzunderungseinrichtung 7 entzundert und im zweiten Induktionsofen 8 auf Walztemperatur erwärmt.

In Fig 5 ist die Aufbereitung von Walzgut in einer diskontinuierlichen Walzanlage dargestellt. Dabei werden die kalten Brammen 16 zuerst mittels eines Rollenherdofens 17 erwärmt, wobei es in diesem Fall auch möglich ist, Brammen aus einer vorgelagerten mehrsträngigen Stranggießmaschine oder mehreren einsträngigen Stranggießmaschinen (z.B. eine zweisträngige oder zwei einsträngige Maschinen) in den Rollenherdofen 17 einzuführen und dort zu erwärmen. Anschließend werden die Brammen 16 mittels antreibbarer Rollen zuerst in den ersten Induktionsofen 6 eingeführt, dort vorgewärmt, anschließend in der Entzunderungseinrichtung 7 entzundert, im zweiten Induktionsofen 8 auf Walztemperatur erwärmt und schließlich im Warmwalzwerk 9 zu einem Fertigband warmgewalzt.

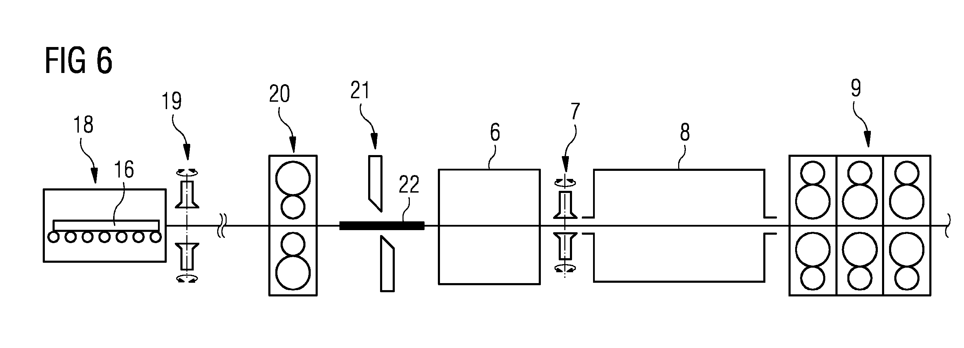

In Fig 6 ist der Einsatz des erfindungsgemäßen Verfahrens bzw. der Vorrichtung beim konventionellen Warmwalzen dargestellt. Wie in der Figur dargestellt, wird gerade eine Bramme 16 mit einer Dicke von 240 mm in einem Stoßherdofen 18 auf eine Temperatur von 1000 °C gebracht, bevor sie direkt nach der Erwärmung mittels eine Primär-Entzunderungseinrichtung 19 entzundert und in einem Reversiergerüst 20 reversierend in 5 oder 7 Stichen vorgewalzt wird. Das durch das Vorwalzen entstehende Zwischenband 22 mit einer Dicke von 25 bis 50 mm, bevorzugt 30 bis 45 mm, wird mittels einer Schopfschere 21 geschopft, bevor es mit einer Eintrittstemperatur von 850 bis 950 °C in einen ersten Induktionsofen 6 eintritt. Im ersten Induktionsofen 6 wird das Walzgut auf eine Temperatur von 1000 bis 1050 °C vorgewärmt, anschließend mittels der Entzunderungseinrichtung 7 entzundert und dabei auf eine Temperatur von 950 bis 1010 °C abgekühlt. Das vorgewärmte und entzunderte Walzgut tritt unmittelbar anschließend in einen zweiten Induktionsofen 8 ein, wo es auf eine Temperatur von 1050 bis 1150 °C erwärmt wird. Anschließend wird das Walzgut in einer Fertigwalzstraße 9 warmgewalzt, bevor es zu Bunden aufgewickelt wird. Vorteilhaft am erfindungsgemäßen Verfahren ist, dass der Stoßherdofen 18 die Bramme auf eine weit geringere Temperatur von 1000 °C (verglichen mit ca. 1200 °C nach dem Stand der Technik) aufwärmen muss, sodass die Strahlungsverluste - die mit der vierten Potenz der Temperatur eingehen - dramatisch reduziert werden können, sodass der Prozess insgesamt energieeffizienter ablaufen kann.

### Bezugszeichenliste

- 1: Stranggießmaschine
- 2: Dünnbramme
- 3: Vorwalzstraße
- 4a...4c: Gerüst der Vorwalzstraße
- 5: Vorband
- 6: Erster Induktionsofen
- 7: Entzunderungseinrichtung
- 8: Zweiter Induktionsofen
- 9: Warmwalzstraße
- 10a...10d: Gerüst der Warmwalzstraße
- 11: Fertigband
- 12: Regler
- 13: Temperaturerfassungseinrichtung
- 14: Temperaturprofilerfassungseinrichtung
- 15: Beheizbare Coilbox
- 16: Bramme
- 17: Rollenherdofen
- 18: Stoßherdofen
- 19: Primär-Entzunderungseinrichtung
- 20: Reversiergerüst
- 21: Schopfschere
- 22: Zwischenband

- s: Anlagenlänge
- T: Temperatur des Walzguts

## Patentansprüche

1. Verfahren zum Aufbereiten von Walzgut (5,16,22) aus Stahl vor dem Warmwalzen, umfassend folgende Verfahrensschritte:
- Vorwärmen des Walzguts (5,16,22) in einem ersten Induktionsofen (6), sodass das vorgewärmte Walzgut mit einer Oberflächentemperatur T₁ ≥ 1000 °C, bevorzugt T₁ ≥ 1050 °C, in eine nachfolgende Entzunderungseinrichtung (7) eintritt; anschließend
- Entzundern des vorgewärmten Walzguts mittels mehrerer Wasserstrahlen in der Entzunderungseinrichtung (7); unmittelbar anschließend
- Erwärmen des entzunderten Walzguts in einem zweiten Induktionsofen (8), wobei das entzunderte Walzgut mit einer Temperatur T₂ ≥ T_{Curie} des Walzguts, vorzugsweise T₂ ≥ 900 °C, in den zweiten Induktionsofen (8) eintritt und die Erwärmung im zweiten Induktionsofen (8) in entweder einer weitgehend inerten oder weitgehend reduzierenden Schutzgasatmosphäre erfolgt; unmittelbar anschließend
- Warmwalzen des erwärmten Walzguts in einem Walzwerk (9) mit mindestens 3 Walzstichen (10a...10d), wobei das erwärmte Walzgut mit einer Temperatur 1220 °C ≥ T₃ ≥ 1050 °C in das Walzwerk (9) eintritt.

2. Verfahren nach Anspruch 1, **dadurch gekennzeichnet, dass** das vorgewärmte Walzgut durch mehrere rotierende Wasserstrahlen aus je einem Rotor einer Rotations-Entzunderungseinrichtung (7) entzundert wird.

3. Verfahren nach Anspruch 1, **dadurch gekennzeichnet, dass** die Temperatur T₁ des vorgewärmten Walzguts vor dem Entzundern mittels einer Temperaturmesseinrichtung (13) erfasst und einem Regler (12) zugeführt wird; und **dass** der Regler (12) unter Zuhilfenahme eines Regelgesetzes und unter Berücksichtigung einer Soll-Temperatur T_{1_Soll} eine Stellgröße ermittelt und einem Regelorgan zuführt, wobei wenigstens ein Induktor des ersten Induktionsofens (6) so angesteuert wird, dass die Temperatur T₁ des vorgewärmten Walzguts der Soll-Temperatur T_{1_Soll} möglichst entspricht.

4. Verfahren nach Anspruch 3, **dadurch gekennzeichnet, dass** ein Temperaturprofil **T₁** des vorgewärmten Walzguts vor dem Entzundern mittels einer Temperaturprofilmesseinrichtung (14) erfasst und einem Regler (12) zugeführt wird; und **dass** der Regler (12) unter Zuhilfenahme eines Regelgesetzes und unter Berücksichtigung eines Soll-Temperaturprofils **T_{1 Soll}** eine Stellgröße ermittelt und einem Regelorgan zuführt, wobei wenigstens ein Induktor des ersten Induktionsofens (6) so angesteuert wird, dass das Temperaturprofil **T₁** des vorgewärmten Walzguts dem Soll-Temperaturprofil **T_{1 Soll}** möglichst entspricht.

5. Verfahren nach Anspruch 1, **dadurch gekennzeichnet, dass** die Temperatur T₃ des erwärmten Walzguts vor dem Warmwalzen mittels einer Temperaturmesseinrichtung (13) erfasst und einem Regler (12) zugeführt wird; und **dass** der Regler (12) unter Zuhilfenahme eines Regelgesetzes und unter Berücksichtigung einer Soll-Temperatur T_{3 Soll} eine Stellgröße ermittelt und einem Regelorgan zuführt, wobei wenigstens ein Induktor des zweiten Induktionsofens (8) so angesteuert wird, dass die Temperatur des erwärmten Walzguts T₃ der Soll-Temperatur T_{3 Soll} möglichst entspricht.

6. Verfahren nach Anspruch 5, **dadurch gekennzeichnet, dass** ein Temperaturprofil **T₃** des erwärmten Walzguts vor dem Warmwalzen mittels einer Temperaturprofilmesseinrichtung (14) erfasst und einem Regler (12) zugeführt wird; und dass der Regler (12) unter Zuhilfenahme eines Regelgesetzes und unter Berücksichtigung eines Soll-Temperaturprofils **T_{3 Soll}** eine Stellgröße ermittelt und einem Regelorgan zuführt, wobei wenigstens ein Induktor des zweiten Induktionsofens (8) so angesteuert wird, dass das Temperaturprofil T**₃** des erwärmten Walzguts dem Soll-Temperaturprofil **T_{3 Soll}** möglichst entspricht.

7. Verfahren nach Anspruch 1, **dadurch gekennzeichnet, dass** der Sauerstoffgehalt der weitgehend inerten Schutzgasatmosphäre < 10 % Vol, bevorzugt < 2 % Vol, gehalten wird.

8. Verfahren nach Anspruch 1, **dadurch gekennzeichnet, dass** der Wasserstoffgehalt der weitgehend reduzierenden Schutzgasatmosphäre zwischen 1 und 5 % Vol, bevorzugt zwischen 3 und 4,5 % Vol, gehalten wird.

9. Vorrichtung zum Aufbereiten von Walzgut (5,16,22) aus Stahl vor dem Warmwalzen, aufweisend:
- ein erster Induktionsofen (6) zum Vorwärmen des Walzguts (5,16,22) auf eine Temperatur T₁ ≥ 1000 °C, bevorzugt T₁ ≥ 1050 °C; nachfolgend
- eine Entzunderungseinrichtung (7) zum Entzundern des vorgewärmten Walzguts mittels mehrerer Wasserstrahlen; unmittelbar nachfolgend
- ein zweiter Induktionsofen (8) mit einer weitgehend inerten oder weitgehend reduzierenden Schutzgasatmosphäre zum Erwärmen des entzunderten Walzguts auf einer Temperatur 1220 °C ≥ T₃ ≥ 1050 °C; unmittelbar nachfolgend
- ein Walzwerk (9) mit mindestens drei Gerüsten (10a...10d) zum Warmwalzen des erwärmten Walzguts.

10. Vorrichtung nach Anspruch 9, **dadurch gekennzeichnet, dass** die Entzunderungseinrichtung (7) je wenigstens eine Rotations-Entzunderungseinrichtung auf der Ober- und der Unterseite des Walzguts umfasst.

11. Vorrichtung nach Anspruch 9, **dadurch gekennzeichnet, dass** zwischen dem ersten Induktionsofen (6) und der Entzunderungseinrichtung (7) eine Messeinrichtung (13,14), die mit einem Regler (12) verbunden ist, zur Messung einer Temperatur oder eines Temperaturprofil des Walzguts (5,16,22) angeordnet ist, wobei der Regler (12) mit wenigsten einem Induktor des ersten Induktionsofens (6) verbunden ist.

12. Vorrichtung nach Anspruch 9, **dadurch gekennzeichnet, dass** zwischen dem zweiten Induktionsofen (8) und dem Walzwerk (9) eine Messeinrichtung (13,14), die mit einem Regler (12) verbunden ist, zur Messung einer Temperatur oder eines Temperaturprofil des Walzguts angeordnet ist, wobei der Regler (12) mit wenigsten einem Induktor des zweiten Induktionsofens (8) verbunden ist.

13. Vorrichtung nach Anspruch 9, **dadurch gekennzeichnet, dass** der Abstand zwischen der Austrittsöffnung des ersten Induktionsofens (6) und der Entzunderungseinrichtung (7) max. 7 m, vorzugsweise max. 4 m, beträgt.

14. Vorrichtung nach Anspruch 9, **dadurch gekennzeichnet, dass** der Abstand zwischen der Austrittsöffnung des zweiten Induktionsofens (8) und dem Walzspalt des ersten Walzgerüsts (10a) des Walzwerks (9) max. 7 m, vorzugsweise max. 4 m, beträgt.

15. Vorrichtung nach einem der Ansprüche 9 bis 14, **dadurch gekennzeichnet, dass** die Vorrichtung in einer Gieß-Walz-Verbundanlage zur Herstellung von Bandstahl zwischen der Vorwalzstraße und der Fertigwalzstraße angeordnet ist.

16. Vorrichtung nach einem der Ansprüche 9 bis 14, **dadurch gekennzeichnet, dass** die Vorrichtung in einer ISP Gieß-Walz-Verbundanlage zur Herstellung von Bandstahl zwischen der beheizbaren Coilbox und der Fertigwalzstraße angeordnet ist.
